# EUROPÄISCHE PATENTSCHRIFT

(11) **EP 1 721 126 B1**
(45) Veröffentlichungstag und Bekanntmachung des Hinweises auf die Patenterteilung: **30.03.2016**
(21) Anmeldenummer: 05701459.9
(22) Anmeldetag: 07.01.2005
(51) Int. Cl.: G01C 21/26

(54) **VERFAHREN ZUR FREISCHALTUNG VON NUTZDATEN, INSBESONDERE NAVIGATIONSDATEN**
METHOD FOR RELEASING USER DATA, ESPECIALLY NAVIGATION DATA
PROCEDE DE COMMUNICATION DE DONNEES UTILES, EN PARTICULIER DE DONNEES DE NAVIGATION

(30) Priorität: 26.02.2004 DE 102004009276
(43) Veröffentlichungstag der Anmeldung: 15.11.2006
(73) Patentinhaber: ROBERT BOSCH GMBH, 70442 Stuttgart (DE)
(72) Erfinder: LISTLE, Holger, 31141 Hildesheim (DE)
(86) Internationale Anmeldenummer: PCT/EP2005/050058
(87) Internationale Veröffentlichungsnummer: WO 2005/083360

(56) Entgegenhaltungen:
- EP-A- 1 139 064
- EP-A- 1 209 445
- DE-A1- 10 155 485

## Beschreibung

Die Erfindung betrifft ein Verfahren zur Freischaltung von Nutzdaten, insbesondere Navigationsdaten, die auf einem Datenträger gespeichert sind oder in ein Datenverarbeitungssystem übertragen werden.

Aus dem Stand der Technik sind Navigationssysteme mit Datenträgern bekannt, die eine große Kapazität aufweisen. Solche Navigationssysteme sind mit einer Funktionalität erhältlich, die das selektive und/oder zeitlich begrenzte Freischalten von Navigationsdaten erlaubt. Ein solches System ist das C-IQ-System der Firma VDO.

Nachteilig an diesem System ist, dass die Freischaltung nur innerhalb politischer Grenzen möglich ist, also nur landes- oder kontinentweise erfolgt. Grenzpendler müssen zumindest zwei Länder oder einen gesamten Kontinent freischalten lassen, um in dem für sie relevanten Gebiet über Navigationsdaten, die sie benötigen, verfügen zu können.

DE-A-10155485, EP-A-1139064, EP-A-1209445 offenbaren Verfahren zur Freischaltung von Navigationsdaten, welche auf einem Datenträger gespeichert sind. Der Benutzer kann dabei wählen, für welche der auf den Datenträgern abgebildeten Gebiete er Navigationsdaten freischalten möchte.

Aufgabe der vorliegenden Erfindung ist es, ein Verfahren bereitzustellen, das eine kundenorientierte Bereitstellung von Nutzerdaten ermöglicht.

Erfindungsgemäß wird diese Aufgabe durch ein Verfahren mit den Merkmalen des Anspruchs 1 gelöst, nämlich dadurch, dass die Nutzdaten, insbesondere Navigationsdaten, die auf einem Datenträger gespeichert sind oder in ein Datenverarbeitungssystem übertragen werden, für ein von dem Nutzer der Nutzdaten frei wählbares Gebiet freigegeben werden. Insbesondere ist dieses Verfahren für Navigationssysteme in Fahrzeugen geeignet. Indem der Nutzer die Navigationsdaten in Gestalt von Kartendaten, Zusatzinformationen über das entsprechende Gebiet,

Veranstaltungshinweise oder andere, örtlich zuordnenbare Daten für ein von ihm frei wählbares Gebiet erhält, wird eine Orientierung an politischen Grenzen, die immer mehr an Bedeutung verlieren, aufgehoben, so dass sich der Datennutzer frei in dem von ihm bevorzugten oder häufig bereisten Gebiet bewegen kann.

Ergänzt man die gerätinterne Lizenzverwaltung um die beschriebene, geometrische Betrachtung, ist es möglich, einen definierten Umkreis um eine Position als Datengebiet freizuschalten. Innerhalb eines Datensatzes ist dieser Umkreis an keine politischen Hierarchien gebunden, wobei als Datensatz der Inhalt eines Datenträgers für das ausgewählte Gebiet angesehen wird.

Neben einer kreisförmigen Festlegung um einen zentralen Punkt und eine Radienangabe, ist es möglich, über die Festlegung bestimmter Eckpunkte ein Gebiet zu definieren, für das die Nutzdaten benötigt werden. Entsprechende Lizenzgebühren fallen in Abhängigkeit von der Größe des ausgewählten Gebietes an.

In einer Weiterbildung der Erfindung ist vorgesehen, dass die Nutzungsberechtigung über ein Funksignal übertragen wird oder auf dem Datenträger vorliegt. Erwirbt der Datennutzer einen Datenträger, wird nur das von ihm gewünschte Gebiet berücksichtigt; alternativ wird ein Abgleich der gegenwärtigen Position des Nutzers über ein Navigationssystem vorgenommen und eine Freigabe in Abhängigkeit davon erteilt, ob eine Lizenz für das gewünschte Gebiet vorliegt. Befindet sich der Nutzer nicht innerhalb des von ihm festgelegten Gebietes, wird die Funktionalität des Systems eingeschränkt oder die Daten nicht freigegeben.

Werden die Nutzdaten bzw. Navigationsdaten über ein Funksignal übertragen, kann die Nutzungsberechtigung ebenfalls über ein Funksignal übertragen werden, wobei gleichzeitig die Position des Nutzers entweder über GPS-Daten oder über eine Funkortung überprüft wird.

Die Nutzungsberechtigung kann auch in kodierter Form auf einem Datenträger vorliegen oder in einem Navigationsgerät gespeichert sein. Wird eine Navigation innerhalb des festgelegten Gebietes gewünscht, erfolgt die Datenfreigabe. Werden Gebiete außerhalb des festgelegten Gebietes durch die Navigation berührt, kann beispielsweise eine Fehlermeldung erfolgen oder die Navigation abgebrochen werden.

Darüber hinaus ist es vorgesehen, dass die Freigabe der Nutzdaten bzw. der Navigationsdaten zeitlich beschränkt erfolgt, wodurch sich eine besonders preiswerte Variante für den Datennutzer realisieren lässt. Statt für eine Urlaubsfahrt viel Geld für entsprechende Daten auszugeben, die nach Abschluss der Fahrt nicht mehr benötigt werden, kann mit dem beanspruchten Verfahren zeitlich und räumlich ein Navigationskorridor festgelegt werden, innerhalb dessen Daten zur Verfügung gestellt werden, die für die Navigation bzw. eine Reise notwendig oder nützlich sind. Insbesondere ist das festzulegende Gebiet an keinerlei politischen Grenzen gebunden.

## Patentansprüche

1. Verfahren zur Freischaltung von örtlich zuordenbaren Nutzdaten, insbesondere Navigationsdaten,
die auf einem Datenträger gespeichert sind oder in ein Datenverarbeitungssystem übertragen werden,
wobei die Daten für ein von dem Nutzer der Nutzdaten wählbares Gebiet freigegeben werden, **dadurch gekennzeichnet, dass** die Nutzdaten für ein Gebiet freizugeben werden, das durch
- Vorgabe eines Mittelpunkts und eines Radius als kreisförmiges Gebiet oder
- Festlegung bestimmter Eckpunkte
durch den Benutzer festliegt wird.

2. Verfahren nach Anspruch 1, **dadurch gekennzeichnet, dass** die Nutzungsberechtigung über ein Funksignal übertragen wird oder auf dem Datenträger vorliegt.

3. Verfahren nach einem der voranstehenden Ansprüche, **dadurch gekennzeichnet, dass** mittels eines Navigationssystems bestimmt wird, ob sich der Nutzer innerhalb des Gebietes befindet, für das eine Nutzungsberechtigung erteilt wurde.

4. Verfahren nach einem der voranstehenden Ansprüche, **dadurch gekennzeichnet, dass** die Freigabe zeitlich beschränkt erfolgt.

5. Verfahren nach einem der voranstehenden Ansprüche, **dadurch gekennzeichnet, dass** das Gebiet an keine politische Grenze gebunden ist.

## Claims

1. Method for releasing locally assignable useful data, in particular navigation data, which are stored on a data storage medium or are transmitted to a data processing system, the data being released for an area which can be selected by the user of the useful data, **characterized in that** the useful data are released for an area which is stipulated by the user by
- specifying a centre and a radius as a circular area or
- stipulating particular corner points.

2. Method according to Claim 1, **characterized in that** the usage authorization is transmitted via a radio signal or is present on the data storage medium.

3. Method according to one of the preceding claims, **characterized in that** a navigation system is used to determine whether the user is inside the area for which a usage authorization has been granted.

4. Method according to one of the preceding claims, **characterized in that** the release is made with a time restriction.

5. Method according to one of the preceding claims, **characterized in that** the area is not tied to a political border.

## Revendications

1. Procédé de communication de données utiles pouvant être attribuées localement, en particulier de données de navigation, qui sont mémorisées sur un support de données ou qui sont transmises dans un système de traitement de données, les données étant communiquées pour une région pouvant être sélectionnée par l'utilisateur des données utiles, **caractérisé en ce que** les données utiles sont communiquées pour une région qui est définie
- par prédéfinition d'un centre et d'un rayon sous forme de région circulaire ou par
- établissement de sommets déterminés par l'utilisateur.

2. Procédé selon la revendication 1, **caractérisé en ce que** l'autorisation d'utilisation est transmise par un signal radio ou est présente sur le support de données.

3. Procédé selon l'une quelconque des revendications précédentes, **caractérisé en ce que** l'on détermine au moyen d'un système de navigation si l'utilisateur se trouve à l'intérieur de la région pour laquelle une autorisation d'utilisation a été délivrée.

4. Procédé selon l'une quelconque des revendications précédentes, **caractérisé en ce que** la libération s'effectue de manière limitée dans le temps.

5. Procédé selon l'une quelconque des revendications précédentes, **caractérisé en ce que** la région n'est associée à aucune frontière politique.
